# FASCICULE DE BREVET EUROPEEN

(11) **EP 0 476 590 B1**
(45) Date de publication et mention de la délivrance du brevet: **15.11.1995**
(21) Numéro de dépôt: 91115758.4
(22) Date de dépôt: 17.09.1991
(51) Int. Cl.: H04Q 1/14, H01R 4/24

(54) **Réglette de raccordement pour câblage à haute fiabilité**
Anschlussleiste für hoch zuverlässige Verkabelung
Connection strip for wiring having high reliability

(30) Priorité: 17.09.1990 FR 9011446
(43) Date de publication de la demande: 25.03.1992
(73) Titulaire: ALCATEL CABLE INTERFACE, 08330 Vrigne aux Bois (FR); FRANCE TELECOM, 75015 Paris (FR)
(72) Inventeur: Audeval, Fabrice, F-08090 Aiglemont (FR); Lejuste, Maurice, F-08330 Vrigne aux Bois (FR); Beloin, Laurent, F-08000 Charleville Mezieres (FR); Lissillour, Albert, F-22301 Lannion Cedex (FR)
(74) Mandataire: Weinmiller, Jürgen

(56) Documents cités:
- EP-A- 0 200 883
- US-A- 4 486 064
- US-A- 4 652 070

## Description

La présente invention est du domaine des télécommunications. Elle concerne une réglette de raccordement de lignes téléphoniques. Elle est utilisée pour le raccordement des paires de conducteurs d'un câble dit de transport aux paires de conducteurs de câbles de capacité moindre dits de distribution, ou pour le raccordement d'un câble de distribution aux lignes d'abonnés, effectué à l'aide de jarretières entre deux réglettes dans un boîtier répartiteur ou sous répartiteur.

Ces réglettes de raccordement sont déjà en tant que telles connues. Elles sont à points de connexion multiples pour les conducteurs du ou des câbles sur l'une de leur face, dite face arrière dans les conditions d'utilisation, et à autant de points de connexion pour les deux conducteurs des différentes jarretières sur leur autre face dite avant.

Les connexions réalisées sur la face arrière sont considérées fixes et définitives. Aucune intervention n'est normalement à prévoir sur cette face arrière sauf cas exceptionnel. La face avant est par contre celle sur laquelle s'effectuent toutes les interventions, pour la mise en place ou le remplacement des jarretières ou la modification des raccordements.

Le brevet US-A 4 652 070, notamment, décrit une telle réglette de raccordement. Cette réglette se présente sous la forme d'un bloc en matière isolante dans lequel sont montés une pluralité d'éléments de connexion. Les éléments de connexion définissent les points de connexion en plusieurs rangées sur les deux faces avant et arrière de la réglette.

Sur la face avant d'intervention, ces éléments de connexion aboutissent dans des cheminées définies dans des nervures longitudinales saillantes sur cette face. Chaque nervure correspond à une rangée de points de connexion. Les nervures sont séparées les unes des autres par des gorges, pour le passage entre elles des jarretières.

Les éléments individuels de connexion montés dans le bloc isolant sont en une seule pièce ou en deux pièces alors reliées l'une à l'autre. Ils sont à fourche de connexion autodénudante sur la face avant, dans les différentes cheminées qui y sont définies, et à partie opposée de connexion du même type ou d'un autre sur la face arrière du bloc. Chaque connexion autodénudante reçoit le conducteur isolé correspondant, qui lui est directement raccordé, sans dénudage préalable, par simple déplacement dans la connexion. Des fentes prévues d'un côté et de l'autre de chaque cheminée, au droit de la ligne entre les branches de chaque fourche, permettent le déplacement du conducteur dans la connexion autodénudante.

Selon ce document aussi, des poussoirs sont associés à la réglette de raccordement pour la connexion simultanée des deux conducteurs de chaque jarretière dans deux connexions autodénudantes adjacentes de la même rangée.

Ces poussoirs sont en matière isolante. Ils présentent deux jambages adaptés aux cheminées et reliés l'un à l'autre, par un pont à l'une de leurs extrémités. Ils reçoivent chacun les deux conducteurs de jarretière, insérés à travers les deux jambages, à proximité du pont de liaison. Le raccordement simultané de ces deux conducteurs aux deux connexions autodénudantes est réalisé par insertion à fond des deux jambages du poussoir dans les deux cheminées. Le pont de liaison entre deux jambages, utilisé pour cette insertion à la main, sert aussi notamment de butée d'insertion à fond du poussoir dans les deux cheminées ainsi obturées. Il sert en outre au retrait du poussoir en place.

Si une telle réglette est globalement satisfaisante, elle pose cependant quelques problèmes pratiques dûs essentiellement aux conditions environnantes d'utilisation et à la densité des connexions réalisées. C'est en particulier le cas avec un milieu environnant hygrométrique, pouvant provoquer une condensation nuisible au niveau des raccordements. C'est aussi le cas pour les interventions de mise en place de nouvelles jarretières ou de modification de raccordement des jarretières existantes, du fait du nombre important de jarretières passant entre chaque rangée de connexions autodénudantes.

La présente invention a pour but d'éviter ces problèmes, notamment en augmentant les lignes de fuites entre les connexions autodénudantes dans un encombrement restreint et en facilitant, par ailleurs, la manipulation des conducteurs en cas de permutation ou remplacement de jarretières.

Elle a pour objet une réglette de raccordement à haute fiabilité de paires de conducteurs d'un câble et de paires de conducteurs de jarretières, comportant :
- un bloc isolant présentant des rangées saillantes de cheminées sur l'une de ses faces dite face avant, avec des gorges entre rangées de cheminées affectées au passage des conducteurs de jarretières,
- une pluralité d'éléments de connexion montés et maintenus dans ledit bloc, dont les portions terminales définissent d'une part des premières connexions individuelles dans les cheminées respectives pour les conducteurs de jarretière, sur ladite face avant du bloc, et d'autre part des rangées de deuxièmes connexions individuelles pour les conducteurs du câble sur la face opposée dite arrière du bloc,
- des premiers moyens de protection des conducteurs de chaque jarretière en place sur leurs premières connexions dans leurs cheminées,
- et des seconds moyens de protection des conducteurs de câble en place sur chaque rangée de deuxièmes connexions,

caractérisée en ce que lesdites cheminées sont séparées les unes des autres par des premières fentes transversales à leur rangée, pour la création de lignes de fuite selon le contour de ces fentes transversales, et en ce qu'elle comporte, en outre, deux passes-fils latéraux sur ledit bloc, en bout des rangées de cheminées, présentant des rainures de passage des conducteurs de jarretière. Elle comporte en outre des guides fils dans les gorges entre rangées de cheminées et pour la rangée terminale, dite inférieure.

Avantageusement chaque passe-fil a une rainure de plus que de gorges ou de guides fils montés dans les gorges du bloc et présente ses rainures consécutives disposées, deux à deux, sensiblement en bout et de part et d'autre d'un ensemble de sorties de fils sur l'un des guides fils, et affectées respectivement aux conducteurs de chacune des jarretières sur ce guide fils entre elles, pour le foisonnement et la séparation des conducteurs des différentes jarretières.

En outre, selon d'autres caractéristiques :
- chaque cheminée a une fente dite inférieure de rétention du conducteur qu'elle reçoit et mis en place sur sa connexion, du type connexion autodénudante,
- les cheminées sont obturées par des capuchons simples ou des capuchons doubles, ou des poussoirs simples ou des poussoirs doubles,
- les poussoirs simples ou doubles sont montés imperdables dans les cheminées entre une position tirée et une position enfoncée,
- les poussoirs ont un Vé de guidage d'insertion en aveugle de conducteur sur la face inférieure de leur jambage et un oeilleton opposé de visualisation du conducteur inséré,
- ces poussoirs sont identifiables et/ou reconnaissables pour les différentes paires de conducteurs de jarretière et présentent des prises de test décalées de l'axe des connexions dans les cheminées.

Les caractéristiques et avantages de la présente invention ressortiront de la description donnée ci-après en regard d'un exemple de réalisation illustré dans les des dessins ci-annexés. Dans ces dessins :
- la figure 1 est une vue de dessus éclatée, illustrant une réglette de raccordement selon l'invention,
- la figure 2 est une vue partielle de face donnée à échelle agrandie du bloc isolant ou corps de la réglette de la figure 1,
- la figure 3 est une vue de côté du bloc isolant de la figure 2,
- la figure 4 est une vue en perspective d'un poussoir dit simple, devant l'une des cheminées du bloc isolant de la réglette de la figure 1,
- la figure 5 est une vue de côté du poussoir simple de la figure 4,
- la figure 6 est une vue de dessous de ce poussoir simple,
- la figure 7, donnée en variante par rapport au poussoir simple précité, illustre un poussoir dit double dans deux cheminées du bloc isolant.

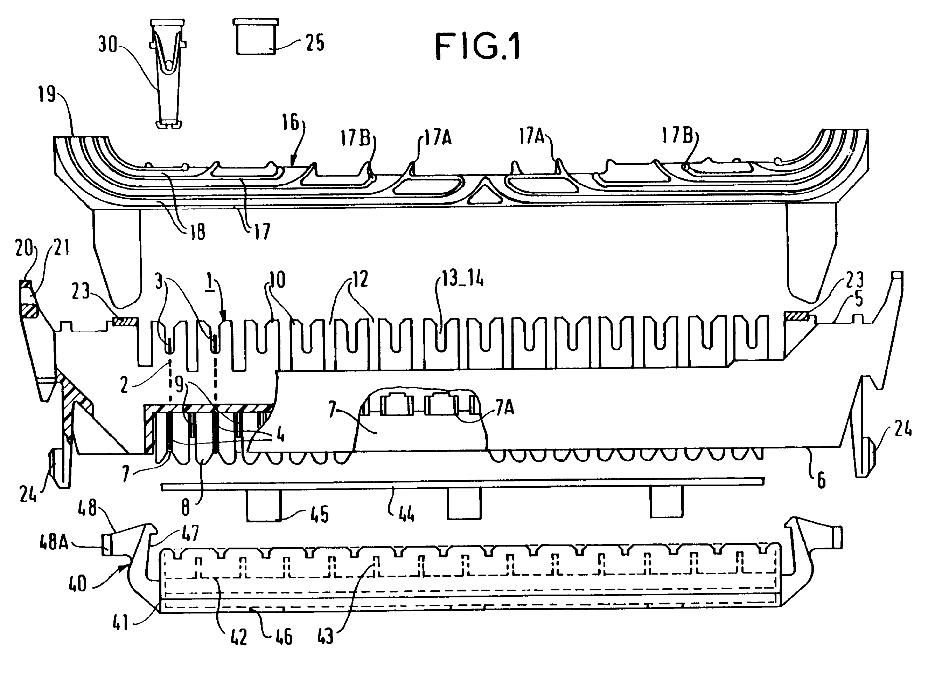

En se référant aux figures 1 à 3, on voit que la réglette de raccordement selon l'invention comporte un bloc ou corps 1 en matière isolante équipé d'une pluralité d'éléments individuels de connexion 2. Les portions terminales des éléments de connexion constituent des connexions 3 et 4. Elles sont accessibles sur l'une et l'autre des faces, dites face avant d'intervention 5 et face arrière 6 du bloc 1, pour les conditions d'utilisation de la réglette de raccordement, et sont disposées en plusieurs rangées sur ces deux faces.

Dans l'exemple illustré, le bloc isolant est équipé de 4 rangées de 14 connexions chacune, sur l'une et l'autre de ses deux faces avant et arrière, pour un câble de 28 paires.

Les connexions avant 3 sont affectées aux conducteurs de jarretière et sont de préférence des connexions autodénudantes. Les connexions arrière 4 sont affectées aux conducteurs des différentes paires du câble, non représenté. Ces connexions 4 sont des connexions autodénudantes ou d'un autre type. Les raccordements des conducteurs des différentes paires aux connexions 4 sont considérés fixes et définitifs, bien qu'une intervention sur la face arrière reste en tant que telle possible pour une modification dès paires précédemment constituées. Ceux de la face avant sont modifiables selon les besoins.

Les éléments de connexion 2 sont fermement retenus dans le bloc. Les connexions 4 de la face arrière 6 sont encadrées par une ailette continue 7 et une série de paires d'ailettes 8, sur les bords longitudinaux de chaque rangée, dites ailettes longitudinales, et par des ailettes transversales 9 sur chaque rangée.

La retenue des éléments de connexion 2 dans le bloc 1 est assurée par les ailettes continues 7. A cet effet, comme montré au niveau de l'arrachement réalisé dans le bloc 1 de la figure 1, le bord de chaque ailette continue 7, intérieur au bloc 1, présente des cales 7A pour la retenue des éléments de connexion de la rangée concernée contre le bord intérieur des paires d'ailettes 8 formées sur le bloc. Chaque ailette continue 7, au départ indépendante du bloc 1, est soudée au bloc par ultrasons, après montage et retenue des éléments de connexion dans le bloc.

On note en outre, que l'ailette continue terminale supérieure 7 une fois soudée au bloc constitue la quatrième paroi latérale d'un réservoir défini sur toute la périphérie de la face arrière 6 du bloc. Ce réservoir peut recevoir un produit d'étanchéité lorsque les raccordements des paires de conducteurs sur les connexions 4 ont été effectués.

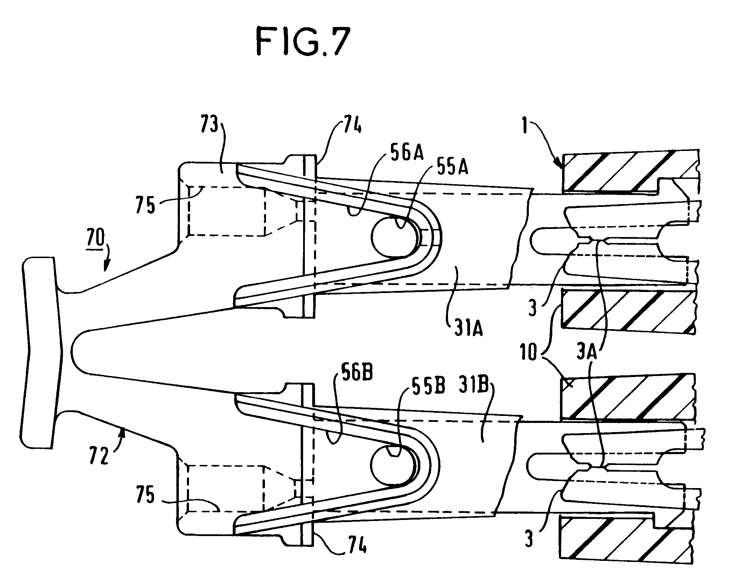

Dans le bloc 1, les connexions autodénudantes 3 de la face avant, telles que celles visibles dans la figure 7, sont disposées dans des cheminées individuelles 10. Elles sont par exemple à bossage 3A de sectionnement d'isolant de conducteur sur leurs branches.

Les cheminées sont issues du bloc et définies dans des nervures longitudinales de sa face avant. A chaque nervure correspond une rangée de cheminées 10 associée à une rangée de connexions autodénudantes 3. Chaque rangée de cheminées 10 est séparée de la rangée voisine par une gorge longitudinale 11, utilisée pour le passage des jarretières desservant la rangée de cheminées au dessus d'elle, une gorge 11 étant également prévue pour la rangée inférieure de cheminées. Sur chacune des rangées, chaque cheminée 10 est séparée de la cheminée voisine par une fente transversale 12.

Les cheminées 10 présentent quant à elles deux fentes latérales 13 et 14 sur leurs parois s'étendant selon la longueur de la rangée. Ces deux fentes 13 et 14 sont en regard l'une de l'autre et de l'axe de la connexion autodénudante dans la cheminée. La fente 13 dite fente inférieure, pour les conditions d'utilisation de la réglette de raccordement, est de largeur moindre que l'autre 14 dite fente supérieure, et légèrement inférieure au diamètre des conducteurs de jarretière. Le profil intérieur de chaque cheminée 10 est précisé ci-après.

Ces dispositions conduisent à un encombrement restreint des connexions autodénudantes 3 dans leurs cheminées individuelles, en permettant l'obtention de lignes de fuite importantes par le contour de chaque fente transversale 12 entre les connexions autodénudantes adjacentes. Elles permettent aussi, par chaque fente inférieure 13, un verrouillage ou une bonne rétention, par pincement dans chaque fente, du conducteur connecté à sa connexion autodénudante 3, en un point proche de cette connexion, en évitant les effets néfastes possibles sur le raccordement de toutes les sollicitations sur le conducteur.

Les gorges 11 entre les rangées de cheminées reçoivent chacune une pièce plate guide fils 16. Les guides fils sont identiques les uns aux autres adaptés à la rangée de cheminées et connexions autodénudantes que chacun dessert. Chacun d'eux est inséré dans l'une des gorges 11 et encliqueté ou retenu d'une autre manière équivalente dans le bloc 1.

Chaque guide fils 16 est à nervures 17 sur l'une et l'autre de ses deux faces qui définissent entre elles des canaux 18 pour l'un et l'autre des deux conducteurs des 7 jarretières possibles pour chaque rangée de connexions autodénudantes. Les canaux des deux faces débouchent alternés sur le bord avant du guide fils, en regard des fentes inférieures 13 des différentes cheminées. Ils débouchent par ailleurs aux deux bouts du bord avant du guide fils en un ensemble cloisonné 19 d'alvéoles indépendants de sortie, en deux lignes pour les deux conducteurs des jarretières.

Sur le bord avant de chaque guide fils 16, les nervures 17 présentent alternativement des épanouissements 17A légèrement saillants et de petits bossages cylindres terminaux 17B de part et d'autre de chaque canal 18 entre deux nervures. Ces dispositions sur les extrémités des nervures permettent d'assurer le guidage convenable et la protection des fils de jarretière en adoptant un guide fils d'encombrement réduit.

Deux pièces passe fils 20 sont maintenues sur les côtés latéraux du bloc isolant 1. Ces deux passes fils latéraux 20, sont par exemple fixés par ultra-sons au bloc. Leur bord avant est saillant sur les ensembles d'alvéoles de sortie 19. Chaque passe fils présente, sur son bord avant, des rainures traversantes 21, en forme d'anneau ouvert, qui sont séparées les unes des autres par des cloisons 22, en T. Sur chaque passe fils, on prévoit avantageusement une rainure traversante 21 de plus que d'ensembles d'alvéoles de sortie 19. Les cloisons entre des rainures 21 sont sensiblement au droit des différents ensembles 19, avec deux rainures consécutives 21 affectées au passage de l'un et l'autre des deux conducteurs des jarretières.

Le passe fils sur chaque côté du bloc 1 assure ainsi un épanouissement des conducteurs de jarretières de l'ensemble d'alvéoles vers les deux rainures 21 concernées, de part et d'autre de cet ensemble.

Il permet de séparer les conducteurs de chaque jarretière pour leur identification et de les dégager du lit de jarretières dans chaque rainure, pour les manipuler plus facilement en cas de permutation ou de remplacement.

La réglette comporte, en outre, en particulier pour son application à des réseaux numériques, une barrette de masse 23 fixée sur le bloc 1 en bout des rangées de cheminées, de chaque côté. Une telle barrette de masse est affectée à la mise à la masse de l'écran de masse des jarretières. On précise simplement que cet écran est constitué par un fil, tel que l'un des fils 23A raccordés à la barrette 23, qui est enroulé en hélice avec un feuillard métallique par exemple en aluminium autour des deux conducteurs de jarretière. Chaque barrette de masse peut être affectée à la distribution de masse de plusieurs réglettes.

Le bloc 1 présente en outre deux pattes latérales d'encliquetage 24 pour son montage et maintien sur un support arrière, non représenté.

La réglette de raccordement comporte, en outre, des capuchons ou de préférence des poussoirs, par exemple tels que le seul capuchon dit simple 25 représenté dans la figure 1 ou le seul poussoir dit simple 30 également représenté pour la variante préférée dans la figure 1, qui sont associés au bloc 1, notamment pour la protection des connexions autodénudantes 3 dans les cheminées individuelles 10 de la face avant. Elle comporte aussi des capuchons 40 sous forme de barrette, associés au bloc 1 pour chacune des rangées de connexions 4 de sa face arrière. Les poussoirs tels que 30 ou les capuchons 25 ferment les cheminées 10, après raccordement des jarretières aux connexions 3. Les capuchons 40 recouvrent les rangées de connexions 4 après que les paires de conducteurs de câble aient été raccordées aux connexions 4.

On indique simplement pour le capuchon simple 25 que celui-ci est rempli de gel ou graisse spéciale et que sa forme est adaptée pour produire un effet de piston et obturer de façon étanche chaque cheminée 10. Ce capuchon 25 est jetable et remplacé après chaque intervention. Lorsque la protection des connexions est assurée par de tels capuchons 25, la mise en place des conducteurs de jarretières dans les connexions autodénudantes est effectuée à l'aide d'un outil standard pour ce type de connexions.

En variante non illustrée, on peut adopter un capuchon dit double de principe tout à fait analogue au capuchon 25 mais obturant simultanément de façon étanche deux cheminées 10 pour la protection des deux conducteurs de la même jarretière en place dans les connexions autodénudantes de ces deux cheminées.

Le capuchon 40 est d'effet comparable aux capuchons simples ou doubles précités mais est conçu pour la protection efficace de toutes les connexions 4 d'une même rangée de la face arrière. Ce capuchon 40 est formé par une barrette creuse 41 ouverte longitudinalement, de section en U. Il est enfilé sur la série de paires d'ailettes longitudinales 8 qu'il recouvre et guidé contre l'ailette longitudinale continue 7 restant extérieure. Il présente d'une part une cloison intérieure 42 de doublage partiel de sa paroi enfilée sur la série de paires d'ailettes 8, et d'autre part des nervures intérieures 43 de guidage entre les paires d'ailettes 8. Il comporte une plaque piston 44 intérieure à la barrette en U, à plots 45 saillants extérieurement sur le fond du U à travers des lumières 46 dans le fond. Ce capuchon 40 rempli de gel ou de graisse spéciale, avec sa plaque piston contre le fond de la barrette en U, est mis en place sur la rangée de connexions 4 puis actionné par les plots 45 pour l'obtention de l'effet piston de la plaque 44, pour la répartition de gel, le remplissage complet et l'obturation étanche de la rangée de connexions 4.

Les ailettes transversales 9 séparant les connexions 4 de chaque rangée de la face arrière 6 constituent des butées de fin de course pour la plaque piston 44.

Deux pattes latérales d'encliquetage 47 assurent le maintien ferme du capuchon 40 sur le bloc isolant 1. Une oreille 48 saillante sur chaque patte permet le retrait du capuchon, si nécessaire.

Un bossage terminal 48A, transversal sur chaque oreille 48 sert de levier pour l'extraction du capuchon 40 faite à l'aide d'un outil spécial. Avantageusement cet outil spécial est celui utilisé pour les déconnexions des conducteurs sur la face arrière et éventuellement sur la face avant de la réglette.

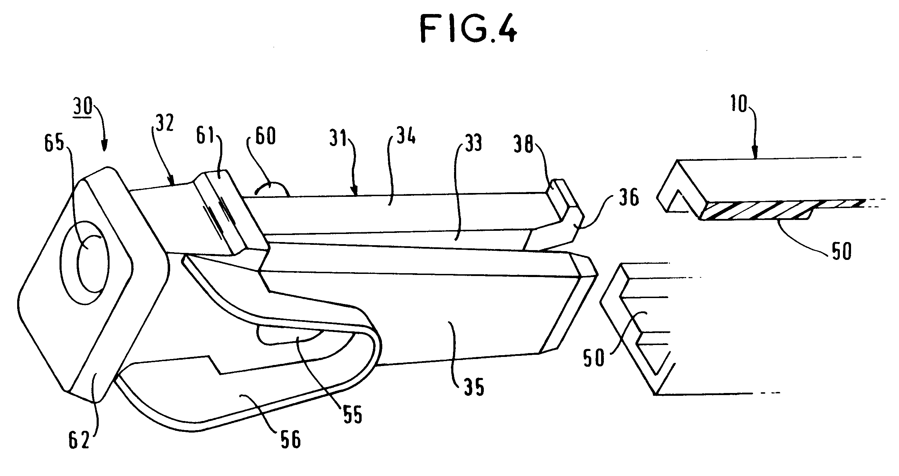

Le poussoir simple 30 est décrit en détail en se référant aux figures 4 à 6, en le considérant orienté pour les conditions d'utilisation de la réglette de raccordement. La description des cheminées 10 est également faite simultanément, en regard de la figure 4.

Le poussoir simple 30 assure d'une part l'insertion d'un conducteur de jarretière dans la connexion autodénudante voulue 3 dans sa cheminée 10, ou l'extraction du conducteur en place, et d'autre part la protection de la connexion autodénudante 3, avec ou sans conducteur de jarretière dans cette connexion par obturation de la cheminée.

Il est à jambage unique 31 adapté au contour interne de chaque cheminée pour un guidage parfait et à tête terminale avant 32, d'actionnement du poussoir et d'obturation de la cheminée.

Le jambage 31 présente une fente 33 sensiblement médiane et parallèle à ses faces inférieure et supérieure, qui le divise sur toute sa longueur en deux parties dites supérieure 34 et inférieure 35. Ces deux parties s'insèrent de part et d'autre de la connexion autodénudante 3 dans la cheminée. L'une d'elles, ici la partie supérieure 34 légèrement plus épaisse que l'autre, présente un chanfrein terminal intérieur 36 pour des facilités d'insertion du jambage sur la connexion autodénudante 3.

La partie supérieure 34 présente également une fente 37 sensiblement médiane, mais dans sa seule partie terminale. Cette fente 37 définit de part et d'autre d'elles deux pattes élastiques à dent terminale d'encliquetage 38, dites pattes d'encliquetage désignées par la même référence que leur dent.

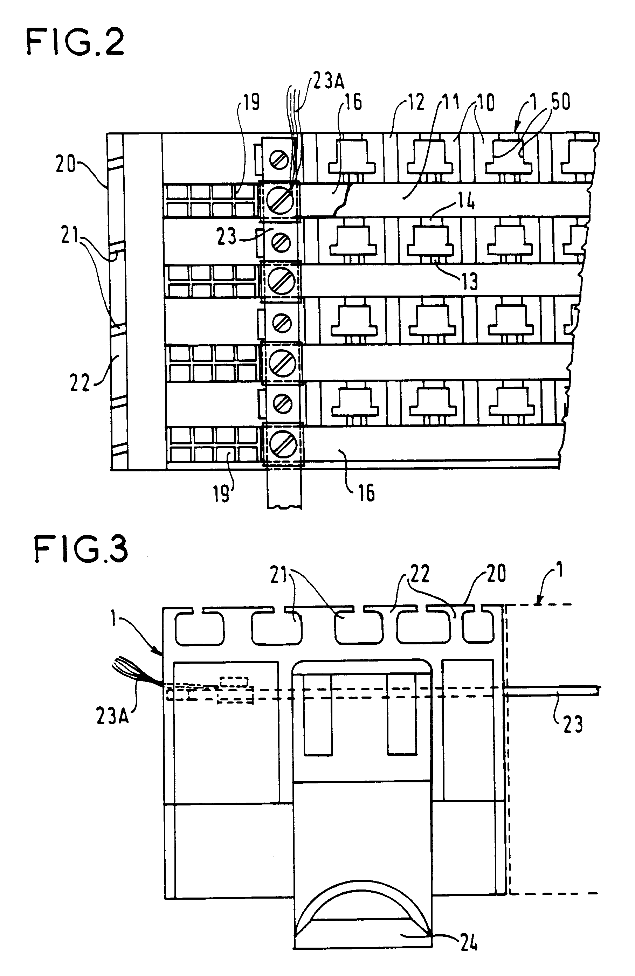

A ces deux pattes d'encliquetage 38 correspondent, dans la cheminée 10, deux épaulements intérieurs 50, en vis-à-vis, sur la seule moitié supérieure sensiblement de ses parois verticales transversales à la rangée de cheminées, et sur les seules portions terminales avant de ces parois (figures 2 et 4). Les épaulements 50 assurent quant à eux un montage imperdable ou verrouillage du poussoir simple dans la cheminée, avec un jeu entre sa position tirée et sa position enfoncée. Ils s'opposent à l'extraction aisée du poussoir de sa cheminée, ainsi protégée contre toutes sortes d'agressions possibles mécaniques, électriques et d'environnement telles que poussières, insectes et humidité, par exemple.

Le jambage 31 présente, dans sa partie avant proche de la tête, un trou débouchant 55 traversant ses deux parties 34 et 35 pour recevoir un conducteur de jarretière. Le conducteur est inséré dans ce trou 55 rendu accessible sur la face inférieure du poussoir, toujours verrouillé dans la cheminée, mais mis dans sa position tirée vers l'avant.

Pour des facilités d'insertion du conducteur aboutissant du dessous de la cheminée, par le guide fils associé à la rangée de cheminées et monté au dessous de cette rangée comme décrit ci-avant en regard des figures 1 à 3, la partie inférieure 35 du jambage 31 porte extérieurement un Vé de guidage 56, d'introduction en aveugle du conducteur dans le trou 55.

Ce Vé de guidage externe 56 fait partie intégrante du poussoir. Il a son ouverture tournée vers la tête avant 32. Les extrémités de ses deux branches sont solidaires de la tête 32, mais les branches elles-mêmes restent dégagées de la face externe de la partie inférieure 35 de jambage et présentent une fente d'espacement 57 entre elles et la partie 35. Cette fente 57 permet l'insertion du Vé 56 sur la paroi inférieure de la cheminée, lors de la mise en position enfoncée du poussoir. Le fond de ce Vé 56 est face au trou 55 qui y débouche, il a son contour intérieur arrondi épousant le contour arrière du trou 55. Il présente, en outre, un pont 58, de liaison avec le bord arrière du trou, formant avec le fond du Vé une butée arrière continue de guidage de fil à l'insertion dans le trou.

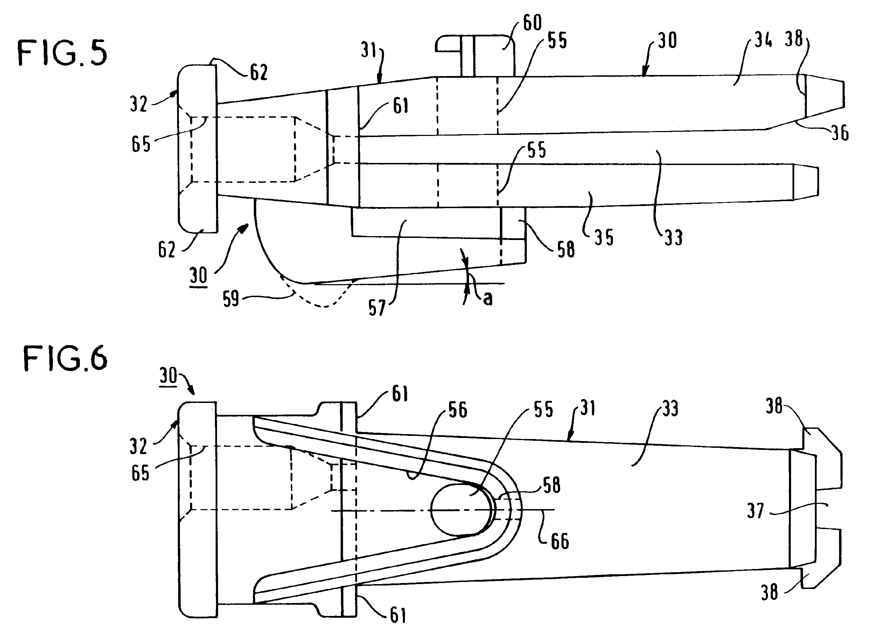

Avantageusement comme il ressort de la figure 5, l'arête inférieure de chacune des branches de ce Vé de guidage 56 présente une ligne de pente, de l'arrière à l'avant, vers le bas, traduite par l'angle de dépouille a au bout avant des branches. Les branches peuvent en outre présenter une petite excroissance terminale 59 de protection, montrée en pointillés.

Ces dépouilles ou autre canalisent l'humidité, en évitant sa propagation vers le fond du Vé et la formation de ponts capillaires.

Ce poussoir simple 30 a, en outre, un oeilleton 60 sur la face supérieure de son jambage 31. Cet oeilleton est issu d'un ergot circulaire, laissé sur la partie supérieure 34 du jambage, au bout du trou 55, et dont le bord avant est crevé. Il permet de visualiser l'extrémité de fil inséré dans le poussoir alors en position tirée pour un contrôle direct de présence du conducteur.

La tête 32 définit deux épaulements latéraux 61, entre elle et le jambage, de butée sur l'extrémité de la cheminée. Elle a en outre deux épaulements terminaux 62 sur son bord avant supérieur et son bord avant inférieur, pour faciliter la préhension du poussoir pour sa mise en position retirée, et faciliter son extraction en force, en faisant levier avec un tournevis par exemple.

A la mise en position enfoncée du poussoir dans la cheminée, les épaulements latéraux 61 de la tête sont en butée en bout de la cheminée et le bord arrière semi-circulaire de l'oeilleton également en butée au fond de la fente supérieure 14 de sa paroi supérieure. Cette fente 14 est à fond arrondi.

L'arrivée en fin de course en position enfoncée du poussoir, pour laquelle le conducteur a déjà franchi le Vé d'entrée entre les branches de la connexion autodénudante, a son isolant déjà sectionné et ne nécessite donc plus qu'une poussée moindre, au-delà du franchissement du bossage 3A de sectionnement d'isolant, et/ou pour laquelle le poussoir a également franchi un éventuel bossage prévu sur la cheminée par exemple sur les bords de la fente 14 pour l'oeilleton, est traduite par une sensation tactile de réalisation de la connexion effectuée accompagnée d'un bruit de "clic".

Le poussoir simple 30 comporte, en outre, un trou de prise de test 65. Ce trou de prise de test débouche sur l'avant de la tête et entre les deux parties du jambage 31. Il est avantageusement légèrement décalé par rapport à l'axe médian 66 de la tête, pour se présenter pareillement décalé par rapport à l'axe de la connexion autodénudante. Ce décalage garantit une prise de test convenable, effectuée sur l'une des deux branches de la connexion autodénudante 3 et non pas sur leur entrée en Vé où il y a présence possible de salissures issues du sectionnement de l'isolant du conducteur en place.

Le trou de prise de test 65 peut en outre être utilisé pour le montage d'un plot ou cabochon d'identification, non illustré, sur la face avant du poussoir simple, notamment pour une identification à la demande en particulier de lignes spéciales.

On note en outre que les poussoirs simples sont avantageusement réalisés en deux couleurs différentes. Ils sont montés alternés sur la face avant de la réglette de raccordement ou par paires alternées, pour faciliter le repérage des conducteurs de chacune des jarretières ou le repérage des différentes jarretières.

Dans la figure 7, on a illustré en variante un poussoir dit double 70. Ce poussoir double est pour l'essentiel comparable au poussoir simple 30 mais assure simultanément la mise en place des deux conducteurs de jarretière sur les deux connexions autodénudantes 3 dans leurs deux cheminées adjacentes 10. Une description détaillée de ce poussoir double n'est donc pas donnée ci-après. Seules ses différences et ses particularités par rapport au poussoir simple sont précisées.

Ce poussoir double 70 est à deux jambages notés 31A et 31B, quasi-identiques au jambage unique précité 31, et à tête terminale avant notée 72 reliant les deux jambages. Les références utilisées ci-avant en regard du poussoir simple désignent les mêmes éléments sur les deux jambages 31A et 31B.

La tête 72 de ce poussoir double forme un pont de liaison en forme d'arche. Les deux pieds 73 de l'arche définissent deux épaulements latéraux 74 entre eux et les jambages 31A et 31B, de butée du poussoir double en position enfoncée dans ses deux cheminées. Deux prises de test 75 assurent l'accès aux deux connexions autodénudantes concernées. Elles sont décalées par rapport à l'axe 66 de chaque connexion autodénudante et sont prévues sur les deux pieds 73.

Cette forme d'arche donnée à la tête 72 permet l'obtention de grandes lignes de fuite par la tête du poussoir double en position enfoncée dans ses cheminées et permet l'extraction du poussoir double par un tournevis.

En variante, non illustrée, donnée par rapport au capuchon simple 25 montré dans la figure 1 et au poussoir double de la figure 7, on peut également utiliser un capuchon double pour obturer simultanément deux cheminées adjacentes contenant les deux connexions autodénudantes des conducteurs de chaque jarretière. Dans ces conditions la mise en place de ces conducteurs de jarretière dans leur connexion autodénudante est effectuée avec un outil standard pour ce type de connexion. Le capuchon double est à tête analogue à celle du poussoir double et présente donc une forme d'arche dont les pieds relient les deux corps de capuchons montés sur les deux cheminées respectives.

En variante non illustrée mais déduite aisément de l'exemple de réalisation décrit ci-avant et illustré, la réglette de raccordement est à face arrière analogue ou quasi analogue à la face avant, avec ses connexions arrière 4 également dans des cheminées individuelles dites arrière. Dans ces conditions, les cheminées arrière ont l'une de leurs parois définie par l'ailette précitée 7 alors convenablement crantée pour définir les fentes entre cheminées et dans la paroi concernée de chacune d'elles.

## Revendications

1. Réglette de raccordement à haute fiabilité de paires de conducteurs d'un câble et de paires de conducteurs de jarretières, comportant :
- un bloc isolant (1) présentant des rangées saillantes de cheminées (10) sur l'une de ses faces dite face avant (5), avec des gorges (11) entre rangées de cheminées affectées au passage des conducteurs de jarretières,
- une pluralité d'éléments de connexion montés et maintenus dans ledit bloc, dont les portions terminales définissent d'une part des premières connexions individuelles dans les cheminées respectives pour les conducteurs de jarretière, sur ladite face avant du bloc, et d'autre part des rangées de deuxièmes connexions individuelles pour les conducteurs du câble sur la face opposée dite arrière du bloc,
- des premiers moyens de protection des conducteurs de chaque jarretière en place sur leurs premières connexions dans leurs cheminées,
- et des seconds moyens de protection des conducteurs de câble en place sur chaque rangée de deuxièmes connexions,
caractérisée en ce que lesdites cheminées (10) sont séparées les unes des autres par des premières fentes (12) transversales à leur rangée, pour la création de lignes de fuite selon le contour de ces fentes transversales, et en ce qu'elle comporte, en outre, deux passes fils (20) latéraux sur ledit bloc (1), en bout des rangées de cheminées (10), présentant des rainures (21) de passage des conducteurs des jarretières dans lesdites gorges (11).

2. Réglette de raccordement selon la revendication 1, caractérisée en ce que chaque passe fil (20) a une rainure (21) de plus que de gorges (11) dans le bloc, et présente ses rainures consécutives considérées deux à deux, disposées sensiblement en bout et de part et d'autre de l'une des gorges et affectées respectivement aux conducteurs de chacune des jarretières dans cette gorge, pour le foisonnement et la séparation des conducteurs des différentes jarretières.

3. Réglette de raccordement selon l'une des revendications 1 et 2, et comportant des guides fils montés dans les gorges entre rangées de cheminées, à nervures sur leurs deux faces définissant entre elles des canaux de guidage des conducteurs des jarretières le long de chaque rangée de cheminées, caractérisée en ce qu'elle comporte en outre une gorge supplémentaire (11) dite inférieure pour la rangée inférieure de cheminées (10), analogue aux gorges entre rangées de cheminée et recevant un guide-fils dit supplémentaire (16), et en ce que chaque guide fils (16) présente, sur un bord dit avant pour le guide fil monté dans sa gorge, des épanouissements saillants (17A) et des bossages terminaux cylindriques (17B) formés alternativement en bout des nervures successives (17) de l'une et l'autre de ses deux faces, pour un guidage et une protection convenable des conducteurs sur le guide fils d'encombrement réduit.

4. Réglette de raccordement selon l'une des revendications 1 à 3, et dans laquelle chaque cheminée (10) comporte des deuxièmes fentes dites inférieure (13) et supérieure (14) sur ses parois parallèles aux gorges de passage des conducteurs de jarretières, caractérisée en ce que la fente inférieure (13) est de diamètre sensiblement inférieur au diamètre du conducteur isolé de jarretière reçu dans la cheminée (10), à travers elle, pour assurer une rétention du conducteur sur ses bords, en un point proche de la première connexion (3) dans cette cheminée.

5. Réglette de raccordement selon l'une des revendications 1 à 4, caractérisée en ce que lesdits premiers moyens de protection sont des capuchons dits simples (25) remplis de gel ou graisse spéciale et montés sur chaque cheminée.

6. Réglette de raccordement selon l'une des revendications 1 à 4, caractérisée en ce que lesdits premiers moyens de protection sont des capuchons dits doubles à deux capuchons individuels proprement dits remplis de gel ou graisse pour deux cheminées adjacentes et à tête en forme d'arche reliant les deux capuchons individuels.

7. Réglette de raccordement selon l'une des revendications 1 à 4, caractérisée en ce que lesdits premiers moyens de protection sont constitués par des poussoirs (30 ; 70), comportant chacun une tête (32 ; 72), au moins un jambage (31 ; 31A, 31B) relié à la tête et adapté à chaque cheminée (10), pour son guidage et la mise en place de l'un des conducteurs de jarretière inséré à travers lui sur la première connexion de type connexion autodénudante (3) dans la cheminée, des butées latérales (61) entre la tête et chaque jambage, d'arrêt en position dite enfoncée du poussoir, et des moyens terminaux d'encliquetage (38) saillants en bout sur chaque jambage, et en ce que les cheminées (10) comportent, sur leur partie terminale dite avant, des épaulements intérieurs (50) pour lesdits moyens d'encliquetage (38) assurant un montage imperdable des poussoirs sur le bloc et leur verrouillage en position dite tirée.

8. Réglette de raccordement selon la revendication 7, caractérisée en ce que chaque jambage (31 ; 31A, 31B) de poussoir est fendu longitudinalement et divisé en une partie dite supérieure (34) et une partie dite inférieure (35), présente lesdits moyens d'encliquetage (38) sur l'une desdites parties supérieure et inférieure également fendue en bout, et comporte extérieurement un Vé de guidage (56), sur ladite partie inférieure (35), d'introduction en aveugle de conducteur dans un trou d'insertion (55) traversant le jambage, ledit Vé de guidage (56) étant à branches non jointives contre ladite partie inférieure (35) et à fond, en regard duquel débouche le trou d'insertion, épousant partiellement le contour dudit trou et lui étant relié par un pont (58).

9. Réglette de raccordement selon la revendication 8, caractérisée en ce que, à l'opposé de ladite partie inférieure (35), les arêtes du Vé de guidage (56) présentent un angle de dépouille (a) et un éventuel moyen supplémentaire terminal (59), à l'extrémité des branches, pour la canalisation d'humidité.

10. Réglette de raccordement selon l'une des revendications 8 et 9, caractérisée en ce que la partie supérieure (34) de jambage de poussoir comporte un oeilleton (60) saillant extérieurement et prolongeant le trou d'insertion de conducteur (55), formé par un ergot cylindrique partiellement tronqué à l'avant du côté de la tête (32 ; 72) de poussoir.

11. Réglette de raccordement selon la revendication 10, caractérisée en ce que les bords arrière dudit ergot formant oeilleton de visualisation (60), à l'opposé de la tête (32; 72) du poussoir, constituent une butée sur le fond de la fente supérieure (14) de chaque cheminée pour la position enfoncée du poussoir.

12. Réglette de raccordement selon la revendication 11, caractérisée en ce qu'elle présente des bossages sur chaque cheminée (10) et/ou sur chaque première connexion (3) pour l'obtention d'une sensation tactile de raccordement réalisé, sensiblement en fin de course en position enfoncée du poussoir.

13. Réglette de raccordement selon l'une des revendications 7 à 12, caractérisée en ce que ladite tête (32 ; 72) de poussoir comporte des épaulements terminaux (62), dits inférieur et supérieur, de préhension du poussoir pour son actionnement, en particulier, de la position enfoncée à la position tirée, et d'extraction en force du poussoir.

14. Réglette de raccordement selon l'une des revendications 7 à 13, caractérisée en ce qu'elle comporte en outre des cabochons associés aux poussoirs individuels et rapportés en bout de leur tête, pour une identification de conducteurs.

15. Réglette de raccordement selon l'une des revendications 8 à 14, caractérisée en ce que lesdits poussoirs (30) sont à jambage unique (31), et affectés individuellement à chacune des cheminées et sont dits poussoirs simples.

16. Réglette de raccordement selon la revendication 15, caractérisée en ce que lesdits poussoirs simples (30) présentent en outre un trou de prise de test (65), traversant ladite tête (32) et débouchant entre les parties supérieure (34) et inférieure (35) dudit jambage unique, formé décalé par rapport à l'axe (66) de la tête et par rapport à l'axe de la connexion autodénudante (3) de chaque cheminée.

17. Réglette de raccordement selon l'une des revendications 15 et 16, caractérisée en ce que lesdits poussoirs simples (30) sont réalisés de deux couleurs différentes, et associés par paire de couleur identique ou différente aux conducteurs de chaque jarretière.

18. Réglette de raccordement selon l'une des revendications 8 à 14, caractérisée en ce que lesdits poussoirs (70) sont à deux jambages (31A, 31B) et à tête (72) de liaison des deux jambages en forme d'arche, et sont affectés à deux cheminées consécutives et dits poussoirs doubles, assurant la mise en place des conducteurs de chaque jarretière sur les connexions autodénudantes individuelles (3) de ces deux cheminées.

19. Réglette de raccordement selon la revendication 18, caractérisée en ce que lesdits poussoirs doubles comportent deux trous de prise de test (75) traversant les pieds de l'arche définie par leur tête et débouchant entre les parties inférieure et supérieure de chacun des deux jambages (31A, 31B) respectivement, formés décalés de l'axe de chaque jambage et de l'axe de chaque connexion autodénudante correspondante (3).

20. Réglette de raccordement selon l'une des revendications 1 à 19 caractérisée en ce qu'elle comporte en outre une barrette de masse (23) montée sur le bloc (1), à au moins l'une des extrémités des rangées de cheminées, à laquelle est raccordée un fil (23A) appartenant à un écran de masse de chaque jarretière.

21. Réglette de raccordement selon l'une des revendications 1 à 20, caractérisée en ce que lesdits seconds moyens protection des conducteurs de câble en place sur chaque rangée de deuxièmes connexions (4) sont constitués par des capuchons (40) sous forme de barrette pour chaque rangée de deuxièmes connexions (4), rempli de gel ou graisse et à plaque piston intérieure (44) actionnable depuis l'extérieur du capuchon barrette (40).

22. Réglette de raccordement selon la revendication 21, caractérisée en ce que le capuchon barrette 40 présente des pattes latérales (47) d'encliquetage sur le bloc (1) et des oreilles latérales saillantes (48) d'extraction, à bossage terminal transversal (48A) formant levier d'extraction sur chaque oreille.

23. Réglette de raccordement selon l'une des revendications 1 à 20, caractérisée en ce que la face arrière du bloc (1) est agencée sensiblement à l'identique de sa face avant et comporte des cheminées individuelles dites arrières pour lesdites deuxièmes connexions (4), et en ce que lesdits seconds moyens de protection des conducteurs de câble sont des capuchons simples ou doubles ou des poussoirs simples ou doubles assurant alors, en outre, la mise en place des conducteurs de câble dans les deuxièmes connexions.

## Patentansprüche

1. Leiste hoher Zuverlässigkeit zum Anschluß von Paaren von Leitern eines Kabels und Paaren von Leitern von Schaltadern, die aufweist:
- einen isolierenden Block (1), der vorspringende Reihen von Schächten (10) auf einer seiner Seiten, Vorderseite (5) genannt, aufweist, mit Kehlen (11) zwischen Reihen von Schächten, die dem Durchlaß von Leitern von Schaltadern zugeordnet sind,
- eine Vielzahl von Kontaktelementen, die im Block montiert und dort fixiert sind, deren Endabschnitte einerseits erste individuelle Kontakte in den jeweiligen Schächten für die Leiter der Schaltadern auf der Vorderseite des Blocks und andererseits Reihen zweiter individueller Kontakte für die Leiter des Kabels auf der Rückseite des Blocks definieren,
- erste Mittel zum Schutz der Leiter jeder Schaltader, die auf den ersten Kontakten in ihren Schächten angeordnet sind,
- und zweite Mittel zum Schutz der Leiter des Kabels, die auf jeder Reihe von zweiten Kontakten angeordnet sind, dadurch gekennzeichnet, daß die Schächte (10) voneinander durch erste zu ihrer Reihe querliegende Schlitze (12) getrennt sind, um Lecklinien gemäß dem Umfang dieser Querschlitze zu bilden, und daß sie außerdem zwei seitliche Drahtdurchführungen (20) auf diesem Block (1) am Ende der Schachtreihen (10) aufweist, die Durchlaßnuten (21) für die Leiter der Schaltadern in den Kehlen (11) enthalten.

2. Anschlußleiste nach Anspruch 1, dadurch gekennzeichnet, daß jede Drahtdurchführung (20) eine Nut (21) mehr hat, als Kehlen (11) im Block vorgesehen sind, und daß ihre aufeinanderfolgenden Nuten paarweise im wesentlichen am Ende und zu beiden Seiten einer der Kehlen angeordnet sind, die den Leitern je einer der Schaltadern auf dieser Drahtführung in dieser Kehle zugeordnet sind, zur Auffächerung und Trennung der Leiter der verschiedenen Schaltadern.

3. Anschlußleiste nach einem der Ansprüche 1 und 2, die Drahtführungen aufweist, die in den Kehlen zwischen Reihen von Schächten montiert sind, mit Rippen auf ihren beiden Flächen, die zwischen sich Führungskanäle für die Leiter der Schaltadern entlang jeder Reihe von Schächten definieren, dadurch gekennzeichnet, daß sie außerdem eine zusätzliche untere Kehle (11) für die untere Reihe von Schächten (10) ähnlich den Kehlen zwischen Schachtreihen aufweist, die eine zusätzliche Drahtführung (16) aufnimmt, und daß jede Drahtführung (16) an einem vorderen Rand für die in ihre Kehle eingeführten Drahtführung vorspringende Ausbuchtungen (17A) und zylindrische Endwölbungen (17B) aufweist, die abwechselnd am Ende der aufeinanderfolgenden Rippen (17) der einen und der anderen ihrer beiden Seiten ausgebildet sind, um die Leiter geeignet auf der Drahtführung mit verringertem Platzbedarf zu führen und zu schützen.

4. Anschlußleiste nach einem der Ansprüche 1 bis 3, bei der jeder Schacht (10) zweite untere (13) und obere Schlitze (14) auf seinen zu den Kehlen zum Durchlaß der Leiter der Schaltadern parallelen Wänden aufweist, dadurch gekennzeichnet, daß der untere Schlitz (13) einen wesentlich geringeren Durchmesser als der durch ihn im Schacht (10) aufgenommene isolierte Leiter der Schaltader hat, um den Leiter an seinen Rändern an einem Punkt nahe des ersten Kontakts in diesem Schacht festzuhalten.

5. Anschlußleiste nach einem der Ansprüche 1 bis 4, dadurch gekennzeichnet, daß die ersten Schutzmittel einfache Kappen (25) sind, die mit Gel oder speziellem Fett gefüllt und auf jeden Schacht montiert sind.

6. Anschlußleiste nach einem der Ansprüche 1 bis 4, dadurch gekennzeichnet, daß die ersten Schutzmittel doppelte Kappen mit zwei individuellen Kappen sind, die mit Gel oder Fett für zwei benachbarte Schächte gefüllt sind, und die einen bogenförmigen Kopf haben, der die beiden einzelnen Kappen verbindet.

7. Anschlußleiste nach einem der Ansprüche 1 bis 4, dadurch gekennzeichnet, daß die ersten Schutzmittel aus Drückern (30; 70) bestehen, die je einen Kopf (32; 72), mindestens eine Strebe (31; 31A, 31B), die mit dem Kopf verbunden und jedem Schacht (10) für seine Führung und die Anordnung eines der Leiter der Schaltader angepaßt sind, der durch ihn auf den ersten Kontakt vom Typ des die Isolierung durchdringenden Kontakts (3) im Schacht eingeführt wurde, seitliche Anschläge (61) zwischen dem Kopf und jeder Strebe zum Festhalten des Drückers in der eingedrückten Stellung, und End-Einrastmittel (38) aufweisen, die am Ende jeder Strebe vorspringen, und daß die Schächte (10) an ihrem vorderen Endbereich Innenschultern (50) für die Einrastmittel (38) aufweisen, die eine unverlierbare Montage der Drücker auf den Block und ihre Verriegelung in der gezogenen Stellung gewährleisten.

8. Anschlußleiste nach Anspruch 7, dadurch gekennzeichnet, daß jede Drücker-Strebe (31; 31A, 31B) in Längsrichtung geschlitzt und in einen oberen Teil (34) und einen unteren Teil (38) geteilt ist, sowie Einrastmittel (38) auf einem der unteren und oberen Teile, der ebenfalls am Ende geschlitzt ist, und außen ein Führungs-V (56) auf dem unteren Bereich aufweist, um einen Leiters in ein Einführungsloch (55), das die Strebe durchquert, blind einführen zu können, wobei das Führungs-V (56) Schenkel hat, die nicht mit dem unteren Teil (35) und dem Boden zusammentreffen, sowie einen Boden, gegenüber dem das Einführungsloch mündet und der teilweise die Umfangsform dieses Lochs annimmt und mit diesem über eine Brücke (58) verbunden ist.

9. Anschlußleiste nach Anspruch 8, dadurch gekennzeichnet, daß entgegengesetzt zum unteren Teil (35) die Spitzen des Führungs-V (56) einen Freiwinkel (a) und ein eventuelles zusätzliches Endmittel (59) am Ende der Schenkel für die Kanalisierung der Feuchtigkeit haben.

10. Anschlußleiste nach einem der Ansprüche 8 und 9, dadurch gekennzeichnet, daß der obere Strebenteil (34) des Drückers ein Auge (60) aufweist, das nach außen vorsteht und das Einführungsloch des Leiters (55) verlängert, wobei das Auge aus einem zylindrischen, teilweise vor der Seite des Kopfes (32; 72) des Drückers abgestumpften Nocken besteht.

11. Anschlußleiste nach Anspruch 10, dadurch gekennzeichnet, daß die hinteren Ränder des Nockens, der das Auge (60), in dem der Leiter sichtbar wird, bildet, entgegengesetzt zum Kopf (32; 72) des Drückers einen Anschlag auf dem Boden des oberen Schlitzes (17) jedes Schachts für die eingedrückte Stellung des Drückers bilden.

12. Anschlußleiste nach Anspruch 11, dadurch gekennzeichnet, daß sie Wölbungen auf jedem Schacht (10) und/oder auf jedem ersten Kontakt (3) aufweist, um im wesentlichen am Ende des Hubs in der eingedrückten Stellung des Drückers eine Berührungsempfindung des hergestellten Anschlusses zu erhalten.

13. Anschlußleiste nach einem der Ansprüche 7 bis 12, dadurch gekennzeichnet, daß der Drückerkopf (32; 72) obere und untere Endschultern (62) zum Ergreifen des Drückers für seine Betätigung enthält, insbesondere von der eingedrückten in die herausgezogene Stellung, und zum vollständigen Herausziehen des Drückers unter Kraftaufwand.

14. Anschlußleiste nach einem der Ansprüche 7 bis 13, dadurch gekennzeichnet, daß sie außerdem den einzelnen Drükkern zugeordnete und am Ende ihres Kopfes angeordnete Rundkopfnägel zur Identifizierung der Leiter aufweist.

15. Anschlußleiste nach einem der Ansprüche 8 bis 14, dadurch gekennzeichnet, daß die Drücker (30) eine einzige Strebe (31) aufweisen und einzeln jedem der Schächte zugeordnet sind und einfache Drücker genannt werden.

16. Anschlußleiste nach Anspruch 15, dadurch gekennzeichnet, daß diese einfachen Drücker (30) außerdem ein Testloch (65) aufweisen, das den Kopf (32) durchquert und zwischen dem oberen (34) und dem unteren Teil (35) der einzigen Strebe mündet, die zur Achse (66) des Kopfes und zur Achse des Kontakts (3) jedes Schachts verschoben angeordnet ist.

17. Anschlußleiste nach einem der Ansprüche 15 und 16, dadurch gekennzeichnet, daß diese einfachen Drücker (30) in zwei verschiedenen Farben hergestellt sind und in Paaren gleicher Farbe oder unterschiedlicher Farbe den Leitern jeder Schaltader zugeordnet sind.

18. Anschlußleiste nach einem der Ansprüche 8 bis 14, dadurch gekennzeichnet, daß die Drücker (70) zwei Streben (31A, 31B) und einen bogenförmigen Kopf (72) zur Verbindung der beiden Streben aufweisen und zwei aufeinanderfolgenden Schächten zugeordnet sind und doppelte Drücker genannt werden, die die Anordnung der Leiter jeder Schaltader auf den individuellen Kontakten (3) dieser beiden Schächte gewährleisten.

19. Anschlußleiste nach Anspruch 18, dadurch gekennzeichnet, daß die doppelten Drücker zwei Testlöcher (75) aufweisen, die die Füße des von ihrem Kopf definierten Bogens durchqueren und zwischen dem unteren und oberen Bereich jeder der beiden Streben (31A, 31B) münden und zur Achse jeder Strebe und der Achse jedes entsprechenden Kontakts (3) verschoben angeordnet sind.

20. Anschlußleiste nach einem der Ansprüche 1 bis 19, dadurch gekennzeichnet, daß sie außerdem einen auf den Block (1) montierten Massestab (23) an mindestens einem der Enden der Reihen von Schächten aufweist, an den ein Draht (23A) angeschlossen ist, der zu einem Masseschild jeder Schaltader gehört.

21. Anschlußleiste nach einem der Ansprüche 1 bis 20, dadurch gekennzeichnet, daß die zweiten Schutzmittel der Kabelleiter auf jeder Reihe von zweiten Kontakten (4) aus Kappen (40) in Stabform für jede Reihe von zweiten Kontakten (4) bestehen, die mit Gel oder Fett gefüllt sind und eine innere Kolbenplatte (44) aufweisen, die von außerhalb der Stabkappe (40) betätigt werden kann.

22. Anschlußleiste nach Anspruch 21, dadurch gekennzeichnet, daß die Stabkappe (40) Seitenlaschen (47) zum Einrasten auf dem Block (1) und seitliche vorspringende Entnahmeohren (48) mit transversaler Endwölbung (48A) aufweist, die einen Entnahmehebel auf jedem Ohr bilden.

23. Anschlußleiste nach einem der Ansprüche 1 bis 20, dadurch gekennzeichnet, daß die Rückseite des Blocks (1) im wesentlichen gleich seiner Vorderseite ausgebildet ist und einzelne hintere Schächte für die zweiten Kontakte (4) aufweist, und daß die zweiten Schutzmittel der Kabelleiter einfache oder doppelte Kappen oder einfache oder doppelte Drücker sind, die dann außerdem das Eindrücken der Kabelleiter in die zweiten Kontakte gewährleisten.

## Claims

1. A connection strip for high reliability interconnection of pairs of conductors in a cable and pairs of conductors in jumpers, the strip comprising:
an insulating block (1) having projecting rows of chimneys (10) on a "front" one of its faces (5), with valleys (11) between the rows of chimneys for passing the conductors of the jumpers;
a plurality of connection elements mounted and held in said block, terminal portions of the connection elements defining first individual connectors in respective chimneys on said front face of the block for connection with jumper conductors, and rows of second individual connectors on the opposite "rear" face of the block for connection with the cable conductors;
first protection means for protecting the conductors of each jumper installed in the first connectors in their chimneys; and
second protection means for protecting the cable conductors installed in each row of second connectors;
the strip being characterized in that said chimneys (10) are separated from one another by transverse first slots (12) extending across the rows thereof, thereby creating creepage distances around the outlines of said transverse slots, and in that it further includes two wire-passing pieces (20) at the ends of said block (1) at the ends of the rows of chimneys (10) and having grooves (21) for passing the jumper conductors into said valleys (11).

2. A connection strip according to claim 1, characterized in that each wire-passing piece (20) has one more groove (21) than there are valleys (11) in the block, and has consecutive ones of its grooves taken in pairs disposed substantially end-on on either side of one of the valleys for the purpose of conveying respective ones of the conductors in each of the jumpers in the valley, thereby splaying out and separating the conductors of the various jumpers.

3. A connection strip according to claim 1 or 2, and including wire guides mounted in the valleys between the rows of chimneys, having ribs on their two faces defining therebetween guide channels for the jumper conductors along each of the rows of chimneys, the connection strip being characterized in that it further includes an additional "bottom" valley (11) for the bottom row of chimneys (10), said valley being analogous to the valleys between the rows of chimneys and receiving a "additional" wire guide (16), and in that a "front" edge of each wire guide (16) when mounted in its valley has projecting extensions (17A) and cylindrical end projections (17B) formed in alternation at the ends of successive ribs (17) on each of its two faces for the purpose of appropriately protecting and guiding conductors over the compact wire guide.

4. A connection strip according to any one of claims 1 to 3, and in which each chimney (10) includes "bottom" and "top" second slots (13, 14) in its walls parallel to the valleys for passing the jumper conductors, the connection strip being characterized in that the bottom slot (13) is of width perceptibly smaller than the diameter of the insulated jumper conductor received in the chimney (10) therethrough, thereby retaining the conductor between its edges at a point close to the first connector (3) in said chimney.

5. A connection strip according to any one of claims 1 to 4, characterized in that said first protection means are "single" caps (25) filled with special grease or gel and mounted on each chimney.

6. A connection strip according to any one of claims 1 to 4, characterized in that said first protection means are "twin" caps having two individual caps per se filled with grease or gel for two adjacent chimneys and having a head in the form of an arc interconnecting the two individual caps.

7. A connection strip according to any one of claims 1 to 4, characterized in that said first protection means are constituted by pushers (30; 70) each including a head (32; 72), at least one leg (31; 31A, 31B) connected to the head and adapted to fit in a chimney (10) for guidance purposes and for installing one of the jumper conductors inserted therethrough on the first connector in the chimney, which connector is of the insulation displacement type (3), lateral abutments (61) between the head and each leg for stopping the pusher in a "pushed-in" position, and end snap-fastening means (38) projecting from the end of each leg, and in that the "front" end portions of the chimneys (10) include inside shoulders (50) for said snap-fastening means (38) enabling the pushers to be mounted on the block and to be held captive thereon in a "pull-out" position.

8. A connection strip according to claim 7, characterized in that each pusher leg (31; 31A, 31B) is split longitudinally, being divided into a "top" portion (34) and a "bottom" portion (35), has said snap-fastening means (38) on one of said top and bottom portions which is likewise split at the end, and includes an external guide V (56) on said bottom portion (35) for blind insertion of the conductor in an insertion hole (55) passing through the leg, said guide V (56) having non-touching branches overlying said bottom portion (3) and having a tip into which the insertion hole opens out, said tip fitting around a portion of the outline of said hole and being connected thereto by a bridge (58).

9. A connection strip according to claim 8, characterized in that the edges of the guide V (56) facing away from said bottom portion (35) present an undercut angle (a) and are optionally fitted with additional end means (59) at the ends of the branches of the V for channeling moisture.

10. A connection strip according to claim 8 or 9, characterized in that the top portion (34) of the pusher leg includes an outwardly projecting loop-hole (60) extending the conductor insertion hole (55) and constituted by a cylindrical stud that is partially removed at the front adjacent to the head (32; 72) of the pusher.

11. A connection strip according to claim 10, characterized in that the rear edges of said observation loophole-forming stud (60) facing away from the pusher head (32; 72) constitute an abutment for engaging the tip of the top slot (14) in each chimney when the pusher in its pushed-in position.

12. A connection strip according to claim 11, characterized in that it has projections on each chimney (10) and/or on each first connector (3) for obtaining a tactile sensation when a connection is made substantially at the end of the stroke of the pusher in its pushed-in position.

13. A connection strip according to any one of claims 7 to 12, characterized in that said pusher head (32; 72) includes "top" and "bottom" end shoulders (62) for enabling the pusher to be grasped for actuation purposes, in particular when the pusher is to be pulled from its pushed-in position to its pulled-out position, and also for forcibly extracting the pusher.

14. A connection strip according to any one of claims 7 to 13, characterized in that it further includes covers associated with the individual pushers and applied to the ends of their heads for conductor identification purposes.

15. A connection strip according to any one of claims 8 to 14, characterized in that said pushers (30) have single legs (31) and are used individually in each of said chimneys and are referred to as "single" pushers.

16. A connection strip according to claim 15, characterized in that each of said single pushers (30) further includes a test point hole (65) passing through said head (32) and opening out between the top and bottom portions (34, 35) of said single leg, the test point hole being offset from the axis (66) of the head and relative to the axis of the insulation displacing connector (3) in each chimney.

17. A connection strip according to claim 15 or 16, characterized in that said single pushers (30) are made in two different colors and are associated in identical or different color pairs with the conductors of each jumper.

18. A connection strip according to any one of claims 8 to 14, characterized in that said pushers (70) have two legs (31A, 31B) and a head (72) in the form of an arch interconnecting the two legs, each pusher being used in association with two consecutive chimneys and being referred to as a "twin" pusher, serving to install both conductors of a jumper on the individual insulation displacement connectors (3) of said two chimneys.

19. A connection strip according to claim 18, characterized in that each of said twin pushers has two test point holes (75) passing through the ends of the arch defined by the head and opening out between the top and bottom portions of respective ones of each of the two legs (31A, 31B), each hole being offset from the axis of its leg and from the axis of the corresponding insulation displacement connector (3).

20. A connection strip according to any one of claims 1 to 19, characterized in that it further includes a grounding bar (23) mounted on the block (1) at at least one of the ends of the rows of chimneys, with a wire (23A) belonging to the ground screen of each jumper being connected thereto.

21. A connection strip according to any one of claims 1 to 20, characterized in that said second projection means for protecting the cable conductors installed on each row of second connectors (4) are constituted by caps (40) in the form of a bar for each row of second connectors (4), the caps being filled with grease or gel and having respective internal piston plates (44) that can be actuated from outside the bar-shaped cap (40).

22. A connection strip according to claim 21, characterized in that each bar-shaped cap (40) has end lugs (47) for snap-fastening to the block (1) and outwardly projecting extraction hooks (48) with transverse end projections (48A) constituting respective extraction levers on each of the hooks.

23. A connection strip according to any one of claim 1 to 20, characterized in that the rear face of the block (1) is arranged substantially identically to its front face and includes individual "rear" chimneys for said second connector (4), and in that said protection means for protecting the cable conductors are single or twin caps or single or twin pushers which also serve to install the cable conductors in the second connectors.
